# EUROPEAN PATENT APPLICATION

(11) **EP 1 361 520 A1**
(43) Date of publication of application: **12.11.2003**
(21) Application number: 02711317.4
(22) Date of filing: 06.02.2002
(51) Int. Cl.: G06F 13/00, G06F 17/21

(54) **ELECTRONIC MAIL SYSTEM, ELECTRONIC MAIL CREATING METHOD, PROGRAM, AND RECORD MEDIUM**

(30) Priority: 16.02.2001 JP 2001040077; 04.02.2002 JP 2002027387
(71) Applicant: Sony Computer Entertainment Inc., Tokyo 107-0052 (JP)
(72) Inventor: OHBA, Akio c/o SONY COMPUTER ENTERTAINMENT INC., Minato-ku, Tokyo 107-0052 (JP)
(74) Representative: Manitz, Finsterwald & Partner GbR
(86) International application number: JP0200943
(87) International publication number: WO02065304

(57) **Abstract**

In an electronic mail system, first storing unit for storing a plurality of contents data, second storing unit for storing a mail template which contains a screen for forming an electronic mail and a layout of the plurality of contents data in the screen, input means, display means and control device of forming an electronic mail for displaying the screen on the display means with the contents data being arranged according to the mail template, for selecting the contents data in response to a user's selection via the input means, and for forming an electronic mail file with the selected contents data being added thereto are provided.

## Description

### Technical Field

The present invention relates to a technique for forming document or electronic mail, especially to a technique for forming document or electronic mail including multimedia information, in other words, contents such as images or voices.

### Background Art

Through widespread of communication network technique as typified by the internet, various kinds of people can exchange information between each other using electronic mail (e-mail). Using contemporary internet e-mail technique, one can send content such as an image or picture (including motion picture) or a voice, in other words, so-called "multimedia information" along with writing as a text format. MIME (Multi-purpose Internet Mail Extensions) is well known as a format in which multimedia information is attached with text information of e-mail. Now, in the foregoing description, the "content" includes both of text, voice, motion picture, and still picture themselves, and data describing them. Furthermore, the "content" includes game data or Java Applet, both of which can control a computer itself by executing in this computer.

However, inputting text data is a time-consuming operation for one who is not familiar to a keyboard operation or kana-kanji conversion (front-end procession) operation. Furthermore, in attaching content such as image or voice, a certain level of skill of forming content or authoring content material is required for an operator. Trimming image, changing resolution of image, changing size of image, clipping sound, and changing format for saving data, etc. are examples of authoring.

Consequently, it is difficult for the ordinary people to form an e-mail, especially to form and edit content as multimedia information and to form an e-mail attached with this content. Furthermore, in order to utilize an image or a sound that already existed, one should pay attention to copyright or right of portrait for this image or this sound. And, from a legal point of view, one cannot attach the image or the sound. with an e-mail and send this e-mail without permission of the owner of the copyright for this image or the sound. For example, attaching a photo image which is acquired from a web site on the internet with an e-mail and sending this e-mail may be infringement of copyright of this photo image unless the owner of the copyright permits utilization of this photo image.

On the other hand, in a traditional mail such as a pictorial postcard or a various kinds of greeting cards (Christmas Cards, birthday card etc.), all of which act as traditional method of exchanging information, things in association with sending mail such as a situation of a sender guessing from a stamp on the mail, or a picture and a selected design of the card, are sometimes more important than the content of the text. In other words, when information is exchanged through the pictorial card or the greeting card, communicating information on the situation of the sender (the sender is on the road etc.) with a receiver is more important than the content of the text in many cases.

If someone is going to produce the same effect using an e-mail as one gained from the traditional mail described above, attaching content as multimedia information is essential; the receiver can learn about the situation of the sender from the attached content more concretely than from an e-mail including text only. However, for the reason described above, it is difficult to attach content as multimedia information with an e-mail.

Therefore, it is an object of the present invention to provide a system for forming an e-mail easily, especially for attaching contents as multimedia information with the e-mail easily.

### Disclosure of Invention

According to one aspect of the present invention, there is provided an electronic mail system, the system comprising first storing means for storing a plurality of contents data, second storing means for storing a mail template which contains a screen for forming electronic mail and a layout of the plurality of contents data in the screen and control means of forming electronic mail for displaying the screen on display means with the contents data being arranged according to the mail template, for selecting the contents data in response to a user's selection operation via input means, and for forming an electronic mail file with the selected contents data being added thereto.

It may be arranged that the mail template further includes an inquiry screen relating to the contents data and answer options in the inquiry screen, and the control means displays the inquiry screen on the display means with the answer options being arranged, forms answer data in response to the user's selection operation via the input means, and forms the electronic mail file with the answer data being added thereto.

According to another aspect of the present invention, there is provided an electronic mail system, the system comprising first storing means for storing second contents data relating to first contents data, second storing means for storing a mail template which contains a description of a screen for forming an electronic mail and a layout of the second contents data in the screen, and control means for forming an electronic mail file with the second contents data being added thereto, in accordance with the mail template based on viewing the first contents data by a user.

According to another aspect of the present invention, there is provided a method for forming electronic mail with contents data being added thereto, the method comprising the steps of loading a mail template which contains a screen for forming an electronic mail and a layout information of the content data in the screen, the contents data being a target to be added thereto, displaying the contents data according to the screen and the layout information, allowing a user to select any of the content data, and forming an electronic mail file with the selected contents data being added thereto.

It may be arranged that the mail template further includes an inquiry screen relating to the contents data and answer options in the inquiry screen, and the method for forming an electronic mail further comprises the steps of displaying the inquiry screen with the answer options being arranged, allowing the user to select any of the answer options, and forming the electronic mail file with the selected answer options being added thereto.

According to another aspect of the present invention, there is provided a method for forming an electronic mail into which second contents data relating to first contents data is added, the method comprising the steps of loading a mail template which contains a screen for forming electronic mail and a layout information of the second contents data in the screen, the second contents data being a target to be added thereto, based on viewing the first contents data by a user, and forming an electronic mail file with the second contents data being added thereto in accordance with the mail template.

According to another aspect of the present invention, there is provided a computer program for forming electronic mail with contents data being added into, the computer program controlling a data processing unit to perform the steps of loading a mail template which contains a description of information on a screen for forming electronic mail and a description of layout information on the content data in the screen, the contents data being a target to be added into, displaying the contents data visibly according to the information on the screen and the layout information, allowing a user to select any of the content data, and forming an electronic mail file with the selected contents data being added into.

It may be arranged that the mail template further includes an inquiry screen relating to the contents data and answer options in the inquiry screen, and the computer program further controls the data processing unit to perform the steps of displaying the inquiry screen with the answer options being arranged, allowing the user to select any of the answer options, and forming the electronic mail file with the selected answer options being added thereto.

According to another aspect of the present invention, there is provided a computer program for forming an electronic mail into which second contents data relating to first contents data is added, the computer program controlling a data processing unit to perform the steps of loading a mail template which contains a screen for forming electronic mail and a layout information on the second contents data in the screen, the second contents data being a target to be added thereto, based on viewing the first contents data by a user, and forming an electronic mail file with the second contents data being added thereto in accordance with the mail template.

In an electronic mail system, a method for forming electronic mail, and a computer program as described above, it may be arranged that the contents data comprises at least one of text data, still picture data, motion picture data, and sound data, all of them or combination thereof.

It may be arranged that a computer program as described above is provided in a computer-readable recording medium.

### Brief Description of Drawings

Fig. 1 is a block diagram showing an overall structure of the electronic mail system according to the preferred embodiment of the present invention.
Fig. 2 is a block diagram of the terminal device according to the preferred embodiment of the present invention.
Fig. 3 is a functional block diagram of the e-mail function in the terminal according to the preferred embodiment of the present invention.
Fig. 4 is a flowchart showing procedures of forming e-mail according to the preferred embodiment of the present invention.
Fig. 5 is a diagram showing examples of displayed image on a screen in the process of forming e-mail.
Fig. 6 is a diagram showing examples of displayed image on a screen in the process of forming e-mail.
Fig. 7 is a diagram showing examples of displayed image on a screen in the process of forming e-mail.
Fig. 8 is a diagram showing examples of displayed image on a screen in the process of forming e-mail.
Fig. 9 is a diagram showing examples of displayed image on a screen in the process of forming e-mail.

### Best Mode for Carrying Out the Invention

Now, a system according to a preferred embodiment of the present invention will be described with reference to the accompanying drawings.

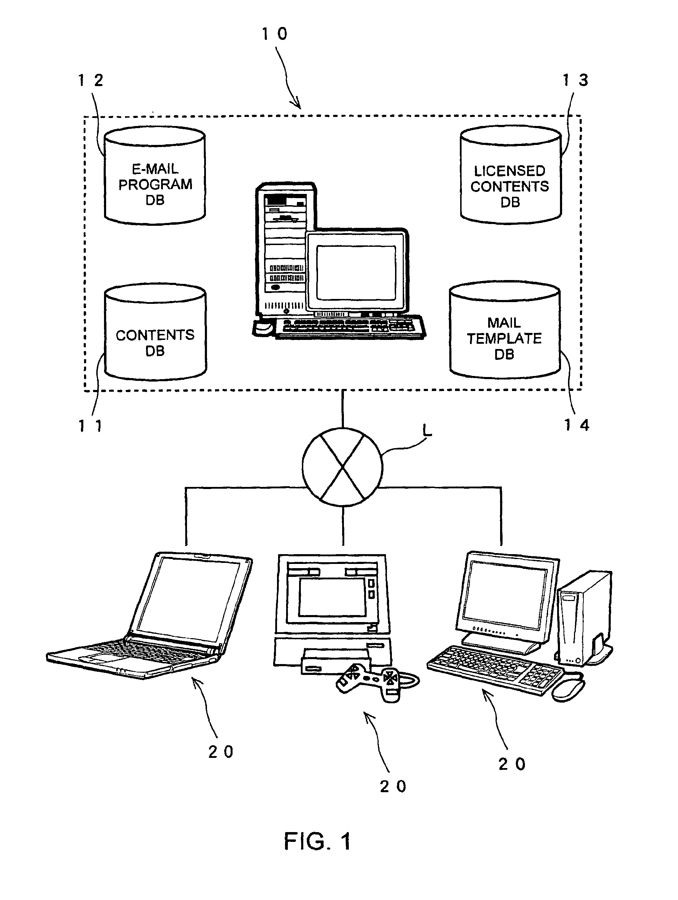

Fig. 1 is a block diagram showing an overall structure of the preferred embodiment of the present invention.

A contents distribution server 10 which distributes contents as multimedia information, and a terminal device 20 which plays the contents audio-visually for a user are connected with each other via a network L such as an internet etc. to which an anonymous user can access. In the foregoing description, the network L acts such that a device connected with the network L can transmit and receive information between the device and a targeted device when a session is established between them. In Fig. 1 the network L is illustrated as a simplified fashion, but, in fact, the configuration of the network L is usually more complicated than the illustrated configuration. For example, the internet is consisted of a plurality of networks combined with each other via gateway servers. The way of connection to the network is not limited to a case that a device is connected with a backbone network directly; the device can be connected with the network L temporarily such as PPP (Point to Point Protocol) connection etc. to the extent that information can be transmitted to and received from the device when the session is established between the device and a server. In Fig. 1 a part of the network is illustrated as a single line, but, in fact, a plurality of communication lines may be connected with each other multiply.

The contents distribution server 10 is a data processing device and can transmit and receive data between the terminal device 20 via the network L. The contents distribution server 10 is comprised of a contents database (in the foregoing description, database is referred to as DB) 11 in which contents are stored as digital data, an e-mail program DB 12 in which a program (e-mail program) to achieve an e-mail function utilizing the stored contents, a licensed contents DB 13 in which contents such as pictures or music permitted or licensed to a user for distributing in the form of e-mail attachment (licensed contents) are stored, and a mail template DB 14 in which mail templates (e-mail template) corresponding to contents are stored.

In the contents DB 11 contents such as movie, music, or a video game all of which is distributed from the contents distribution server 10 are stored as digital data. And, upon request of the terminal device 20 via the network L, the requested contents data are read from this content DB 11.

In the e-mail program DB 12, the e-mail program for achieving the e-mail function customized in accordance with the contents stored in the contents DB 11 is stored.

In the licensed contents DB 13 licensed contents that are licensed to the user are stored. The licensed contents are, for example, a movie preview video, a publicity poster image, an image of a CD album jacket, or voice corresponding to a part of music. The licensed contents are prepared for each of contents stored in the contents DB 11.

In the mail template DB 14, mail templates are stored each of which corresponds to each of the contents stored in the contents DB 11. Mail templates are, for example, of a text-based form, of a layout-based form, of a supplied contents (phrase, cut)-based form, or of a complete mail-base form. The mail template of a particular form is selected among these mail templates based on a decision of a contents distributor, and is designated by a mail creation rule. This decision includes whether a questionnaire should be included or not.

The mail template forms a certain kind of an antecedent of the e-mail format formed in the end. That is to say, the mail template is comprised of a mail format and a control code. The mail format is a kind of a language or a rule that enables both of the licensed content to be used and its layout representation to be displayed on different terminal devices equivalently. More specifically, the mail template can be implemented using XML (eXtensible Markup Language) and JAVA (Trademark). In this case, XML corresponds to the mail format, and JAVA corresponds to the control code. But XML and JAVA are only examples of the mail format and the control code; another structured language widely distributed such as HTML (HyperText Markup Language) can be used as the mail format, and another control code such as ActiveX, which an OS (Operating System) like Windows can interpret, can be used as the control code.

In the case that the content is a movie, the mail template corresponding to this content is comprised of information designating a location of the licensed contents (moving picture, still picture, sound etc.) corresponding to this movie, information on the layout of the licensed contents in the e-mail, examples of sentences by which someone will be interested in the movie such as a sales point of the movie or an impression of the movie, and information on the layout of the sentences.

Upon request of the terminal device 20, the contents distribution server 10 distributes the contents, the e-mail program, the licensed contents and the mail templates corresponding to the contents to be distributed from the databases described above to the requesting terminal device 20.

The terminal device 20 is a data processing device such as a personal computer or a entertainment system that is connected with the network L and can transmit and receive data between the terminal device 20 and another terminal device or the contents distribution server 10. The terminal device 20 obtains the contents data from the contents distribution server 10 via the network L and playbacks the obtained contents data for the user.

Instead of obtaining the contents, the licensed contents, the e-mail program and the mail templates from the contents distribution server 10, the terminal device 20 may be equipped with a device for playing media such as CD (Compact Disc) or DVD (Digital Versatile Disc) and may obtain such data from the media.

Besides the data that consists the contents, the e-mail program or the licensed contents corresponding to these contents, or the mail template customized for these contents may be recorded in the media.

Furthermore, a website from which the e-mail program, the licensed contents or the mail template can be downloaded may be provided apart from the contents distribution server 10 described above. This website can transmit and receive data between this website and the contents distribution server 10 or the terminal device 20 via the network L. In such case, the contents are so constructed that location information on these data on the network (for example, URL (Uniform Resource Locator) or IP (Internet Protocol) address) can be referred from the contents.

In such website, a password or a key which can be obtained only by the user buying the contents officially may be set up, thus only the user buying the contents officially can utilize this website. As described above, various patterns of distributing the e-mail program, the licensed contents and the mail templates exist, and any combination of the patterns of distributing meets the concept of the present invention.

The terminal device 20 is enabled to have the function of forming and sending e-mail utilizing contents by executing the e-mail program and the mail template obtained from the contents distribution server 10, various kinds of media or websites. Furthermore, the terminal device 20 has the function of receiving the e-mail with the contents being attached with and playbacks these contents for the user. Thus, the user of the terminal device 20 can send or receive the e-mail utilizing contents.

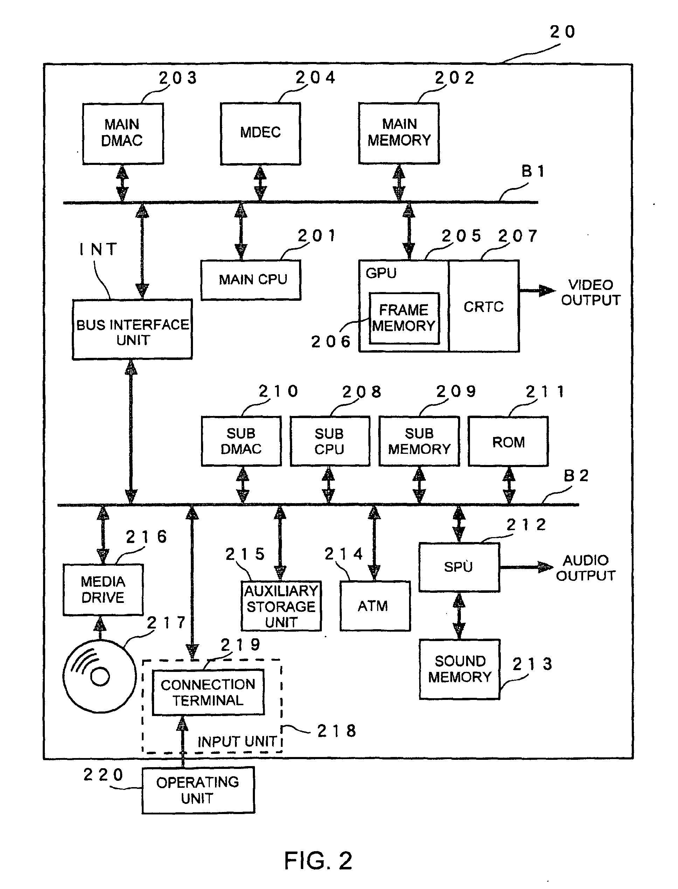

Fig. 2 is a block diagram of an example of a data processing device that can be utilized as the terminal device 20. This terminal device (data processing device) 20 has a function of playing media as well as being capable of connecting with the network L, and is an entertainment device with which the user can play video games in addition to playback video or sound.

This terminal device 20 is equipped with two bus lines, a main bus line B1 and a sub bus line B2. These bus lines B1 and B2 are capable of connecting with each other and detached from each other via a bus interface unit INT.

A main CPU 201, a main memory 202 comprising RAM, a main DMAC (Direct Memory Access Controller) 203, a MPEG (Moving Picture Experts Group) decoder (MDEC) 204 and a GPU (Graphic Processing Unit) 205 having a built-in frame memory 206 are connected with the main bus line B1. A CRTC (CRT Controller) 207 that forms video output signal is connected with the GPU 205.

The main CPU 201 loads a boot program from a ROM 211 on the sub bus line B2 via the bus interface unit INT at the startup of the terminal device 20 and executes this boot program to run an operating system of the terminal device 20. The main CPU 201 controls a media drive 216 to load an application program, data etc. from a media 217 mounted on the media drive, and stores this application program etc. to the main memory 202. Furthermore, the main CPU 201 executes geometry processing to a variety of data read out from the media, for example, data (coordinate value of vertex (representative point) of polygon etc.) of a three-dimensional object comprising a plurality of fundamental figures (polygon). The main CPU 201 forms a display list, the content of which is information on defining polygon, through this geometry processing.

The information on defining polygon is comprised of configuration information on drawing area and polygon information. The configuration information on drawing area is comprised of value of offset coordinate at an address of the frame buffer of the drawing area and value of coordinate of drawing clipping area to cancel drawing when the coordinate of polygon is located out of the drawing area. The polygon information is comprised of polygon attribute information and vertex information; the polygon attribute information is information specifying shading mode, α-blending mode, texture mapping mode, bump mapping mode etc., and the vertex information is information on a coordinate inside a vertex drawing area, a coordinate inside a vertex texture area and a color of vertex etc.

The GPU 205 holds a drawing context and read out corresponding drawing context based on identification information on a image context which is included in a display list notifying from the main CPU 201. Furthermore, the GPU 205 executes rendering processing using this drawing context and draws a polygon on a frame memory 206. The frame memory 206 can be utilized as a texture memory, therefore pixel image on the frame memory 206 can be mapped on a polygon to be drawn as an texture.

The main DMAC 203 controls DMA (Direct Memory Access) data transfer for each circuit connected with the main bus line B1, and controls DMA data transfer for each circuit connected with the sub bus line B2 depending on the situation of the bus interface unit INT.

The MDEC 204 operates in parallel with the main CPU 201 and decompresses or decodes the contents data compressed according to MPEG format or JPEG (Joint Photographic Experts Group) format etc.

A sub CPU 208 comprising microprocessor etc., a sub memory 209 comprising RAM, a sub DMAC 210, a ROM 211 in which programs such as an operating system are stored, a sound processing unit (SPU) 212 which reads out sound data stored in the sound memory 213 and outputs this data as an audio output, a communication control unit (ATM) 214 which transmit and receive information between an external device such as the contents distribution server 10 via the network L, an auxiliary storage unit 215 comprising mass storage unit such as a hard disk unit, a media drive 216 for media 217 such as CD, DVD etc. being mounted on, and a input unit 218 are connected with the sub bus line B2.

The sub CPU 208 executes a variety of operations according to the program recorded in the ROM 211. The sub DMAC 210 controls DMA data transfer etc. for each circuit connected with the sub bus line B2 only when the main bus line B1 and the sub bus line B2 is detached from each other via the bus interface unit INT.

The ATM 214 receives the contents, the e-mail program etc. from the contents distribution server 10. The received contents may be played immediately and outputted as video output or audio output, or may be stored in the auxiliary storage unit 215. The input unit 218 is comprised of a connection terminal 219 to which the input signal from the operating unit (controller) 220 is inputted. The user executes a variety of input operation using this operating unit 220.

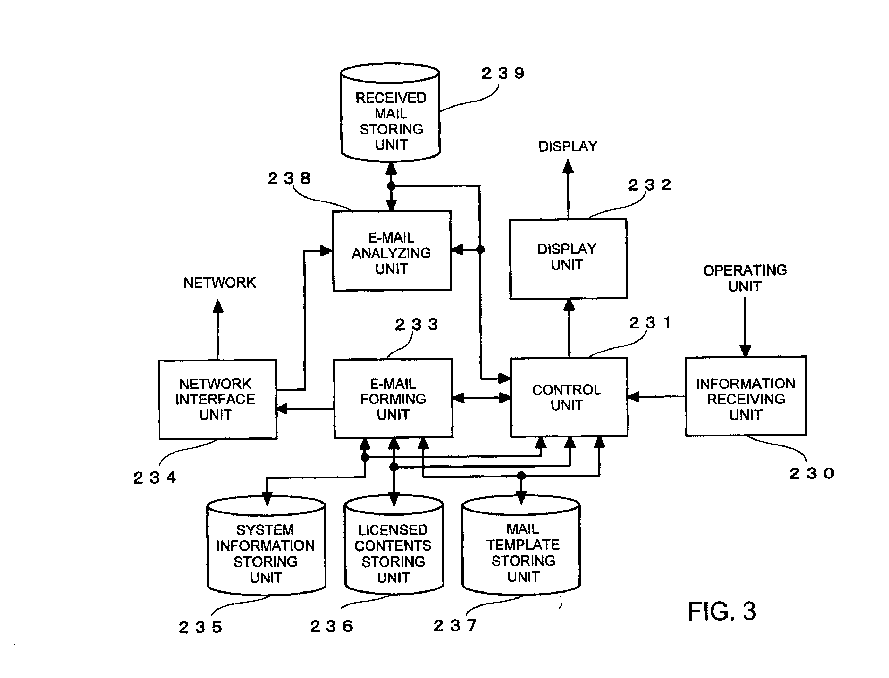

Fig. 3 is a functional block diagram of an e-mail function of the terminal device 20. This function is formed in response to the execution of e-mail program obtained from the contents distribution server 10 (preferably the e-mail program DB 12) or the media 217 in the main CPU 201. As shown in Fig. 3, the terminal device 20 is comprised of an information receiving unit 230, a control unit 231, a display unit 232, an e-mail forming unit 233, a network interface unit 234, a system information storing unit 235, a licensed contents storing unit 236, a mail template storing unit 237, an e-mail analyzing unit 238 and a received mail storing unit 239.

The e-mail program may be executed at any timing such as before playing contents, after playing contents, or during playing contents.

For example, in order that the user viewing or hearing content is capable of sending e-mail corresponding to this content to another people (acquaintance, friend etc.) after playing this content, the terminal device 20 shows a question whether the user is going to form the e-mail or not on a display of the terminal device 20. In this case, it is convenient for the user to show an e-mail forming screen on the display of the terminal device 20 in response to selection of forming e-mail by the user.

Alternatively, the e-mail program may be booted automatically in response to the instruction by the content at a predetermined timing such as before playing this content, after playing this content, or during playing this content. Furthermore, the e-mail program may be booted automatically by the operating system (OS) of the terminal device 20 at a predetermined timing such as before playing this content, after playing this content, or during playing this content.

In response to the instruction of forming the e-mail, the terminal device 20 obtain the e-mail program, the licensed content and the mail template, all of which corresponds to the content, from the source of this content (the contents distribution server 10 or the media 217) or the websites which provides the e-mail program, the licensed content and the mail template described above.

The information receiving unit 230 receives a variety of information inputted by the operating unit 220. This information is necessary for forming e-mail. The received information is sent to the control unit 231.

The control unit 231 controls a variety of operations based on information sent by the information reception unit 230. For example, the control unit 231 controls the display unit 232 to show a predetermined image on the display, and sends the information necessary for forming the e-mail to the e-mail forming unit 233.

The displaying unit 232 shows images on the display of the terminal device 20 in response to the instruction from the control unit 231.

The e-mail forming unit 233 reads out the mail template from the mail template storing unit 237 in response to the instruction from the control unit 231, reads out the text, image, and sound etc. from the licensed contents storing unit 236, and forms a dialog screen for forming e-mail based on these read-out data. The e-mail forming unit 233 incorporates the necessary system information (present time etc.) from the system information storing unit 235 in the dialog screen.

The network interface unit 234 sends the e-mail formed by the e-mail forming unit 233 to the designated e-mail address via the network L. The network interface unit 234 receives a variety of data described above from the content distribution server 10, websites etc. and distributes these data to the e-mail forming unit 233.

In the system information storing unit 235, the system information of the terminal device 20, a history of viewed contents, personal information (name, age, sexuality, address etc.) of the user are stored. In the licensed contents storing unit 236, the licensed contents obtained from the source of contents are stored. In the mail template storing unit 237, the mail template obtained from the source of contents are stored.

The e-mail analyzing unit 238 analyzes the e-mail received from another terminal device 20 via the network interface unit 234. In the received mail storing unit 239, the received e-mail is stored.

### - First Application -

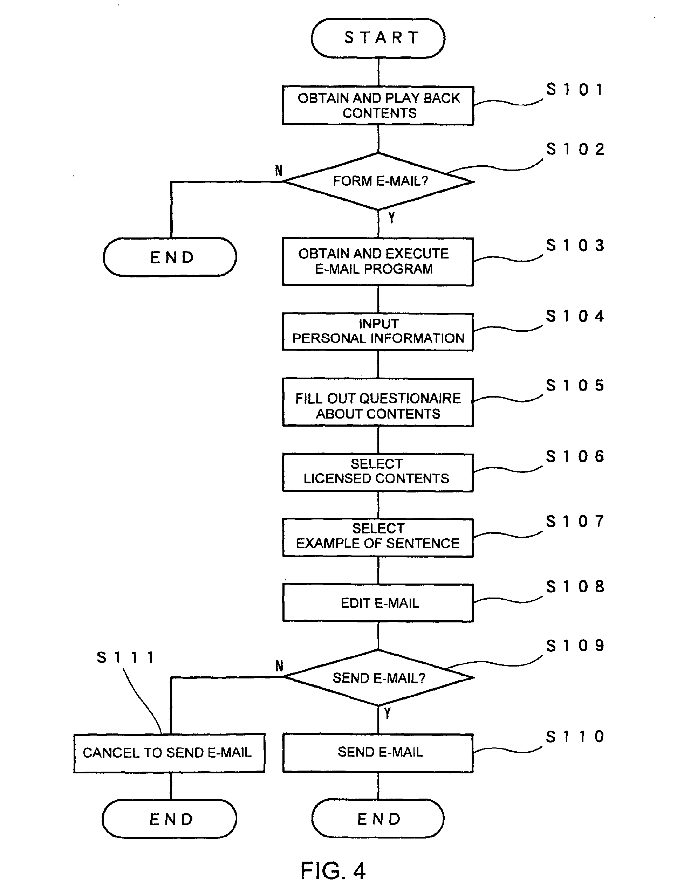

Using the contents distribution server 10 and the terminal device 20 described above, the user of the terminal device 20 can send and receive e-mail according to the procedure shown in the flowchart of Fig. 4. In this embodiment, one example is described in the case that the user views movie as the content.

In step S101, the terminal device 20 obtains contents data of the movie from the contents distribution server 10 or the medium 217 and playbacks the contents data. The user can view movie using this terminal device 20. In step S102, the terminal device 20 shows a question whether the user wishes to form an e-mail utilizing the image or sound of this movie or not on the display of the terminal device 20 at or after the end of the movie. If the determination of step S102 is negated, in other words, the user does not wish to form an e-mail, the procedure ceases.

On the other hand, the determination of step S102 is affirmed, in other words, the user wishes to form an e-mail, the terminal device 20 loads the e-mail program from the contents distribution server 10 or the medium 217 and executes this e-mail program in step S103. Through this execution of the e-mail program, the functional blocks shown in Fig. 3 are formed in the terminal device 20.

It is preferable that an official home page of the movie may be set up in a website in the network L, and the e-mail program may be obtained from this website as well as the contents distribution server 10 and the media 217. In the case that the e-mail program is obtained from the official home page, it is more preferable that a web address of the official homepage, in other words, location information of the official homepage in the network L such as URL or IP address is obtained along with the contents data of the movie. And it is more preferable that the terminal device 20 may access automatically to the official homepage and download the e-mail program in response to the user's demand on forming an e-mail. In this official homepage, the licensed contents (cut of the promotion film, background music (BGM), and phrase of high point of soundtrack etc.) corresponding to this movie and the mail template may be disposed as well as the e-mail program, and in the case that these contents etc. are disposed in the official homepage, it is more preferable that the terminal device 20 may download these contents.

The e-mail program loads a mail template corresponding to the movie (content) from the mail template storing unit 237 and executes the following process in accordance with the detail of this mail template.

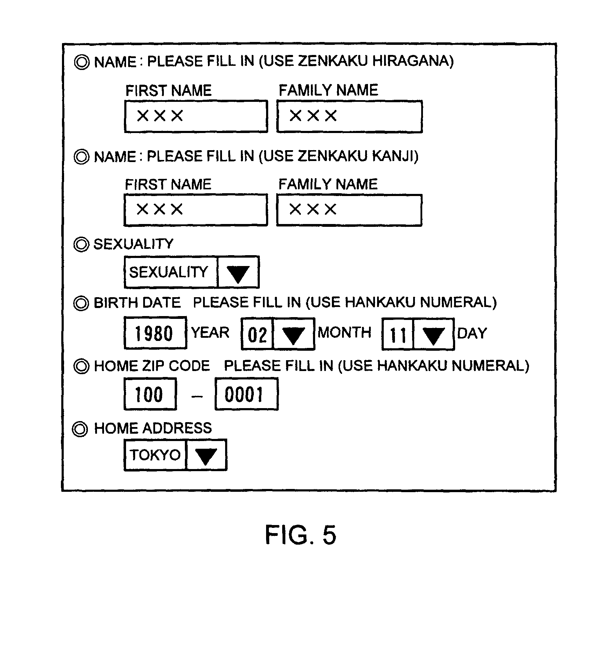

Next, the control unit 231 controls the displaying unit 232 to show the screen as described in Fig. 5 to the display of the terminal device 20. In step S104, the user inputs information to each item of this screen using the operation unit 220 so as to input personal information of the user. In the example as shown in Fig. 5, name, sexuality, date of birth, zip code and address of the user are to be inputted as personal information. If these kinds of information are stored in the system information recording unit 235 in advance, it is preferable that the control unit 231 loads and displays these kinds of information, and seeks confirmation to the user whether these data can be utilized.

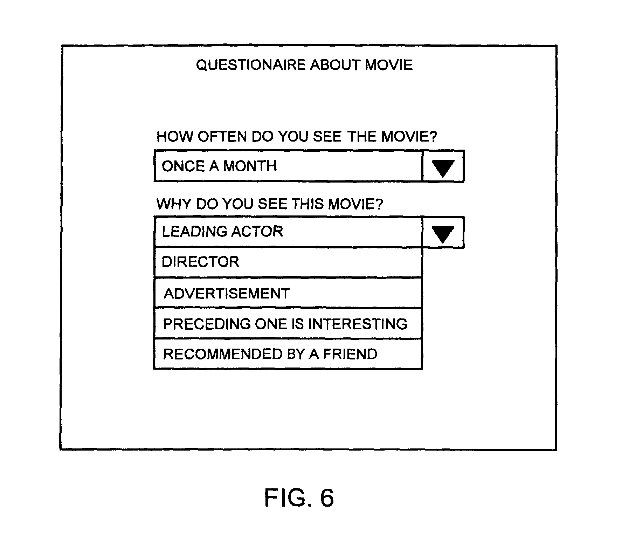

After the user inputs the personal information, the screen as shown in Fig. 6 is displayed on the display of the terminal device 20. In step S105, the user fills out a questionnaire about the movie play-backed just before by selecting from choices prepared for each item by means of the operation unit 220. In this example as shown in Fig. 6, the user fills out the questionnaire by selecting from the choices on the screen by means of the operation unit 220; thus the user need not execute complicated operation for inputting the information. These items and the choices are provided as information that is provided by the distributor of the movie and embedded in the mail template, or provided as one of the licensed contents.

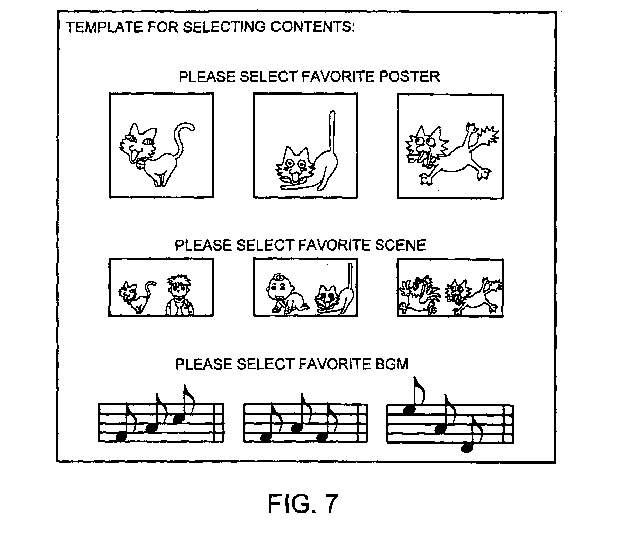

Next, the screen as shown in Fig. 7 is displayed on the display of the terminal device 20. In step S106, the user selects a licensed content corresponding to the movie play-backed just before from the licensed contents displayed on the screen; thus the licensed content utilized for or attached to the e-mail is selected.

Describing in more detail, the control unit 231 controls the displaying unit 232 to show a list of icons on the display of the terminal device, each of which corresponds to the licensed image or sound stored in the licensed contents storing unit 236. The user selects one icon corresponding to user's favorite licensed content from these icons; thus the licensed content utilized for or attached to the e-mail is selected.

In the example shown in Fig. 7, three kinds of poster images, three kinds of scenes (motion picture) of the movie, and three kinds of BGM are provided for the licensed contents, and the user may select one content on each category (poster image, scene, BGM). The control unit 231 controls the displaying unit 232 to show icons on the display of the terminal device 20, each of which corresponds to the three kinds of poster images, three kinds of scenes of the movie, and the three kinds of BGM. The user selects one icon of poster image, one icon of scene of the movie, and one icon of BGM by means of the operation unit 220.

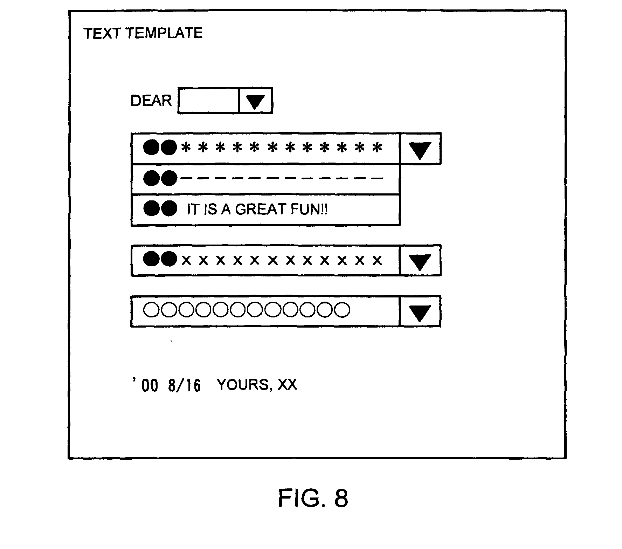

Next, the screen as shown in Fig. 8 is displayed on the display of the terminal device 20. In step S107, the user selects a sentence used in the e-mail from a plurality of sentences displayed on the screen; thus the sentence used in the e-mail is selected.

Describing in more detail, the control unit 231 controls the displaying unit 232 to show a list of examples of sentences stored in the mail template storing unit 237 on the display of the terminal device 20. In the example as shown in Fig. 8, a plurality of sentences which praise the movie, or a plurality of sentences which lead to the receiver of the e-mail to be tempted to see the movie after reading this sentence are prepared in the mail template as the examples of sentences prepared by the distributor of the movie, and the user selects the sentence among these sentences. Displaying a plurality of examples of sentences in the style of pull-down menu for choosing one example by the user as shown in Fig. 8 is explained as a example of method for choosing sentence, but it is understood that a method for choosing sentence is not limited to the illustrated example. Another well-known method for choosing sentence can be applied. In this example as shown in Fig. 8, the user inputs the text of the e-mail by selecting from examples of sentences on the screen by means of the operation unit 220; thus the user need not execute complicated operation for inputting the information.

In this case, an address of the e-mail may be inputted by means of the operation unit 220, or may be selected from a list of addresses already stored in the system information storing unit 235. The method of selecting an address from the list of e-mail addresses is well known in the art, so detailed explanation of this method will be abbreviated here. But one example of this method is explained that the list of addresses is displayed in the style of pull-down menu so that the user selects one address as shown in Fig. 8.

In step S108, the e-mail forming unit 233 edits the input and the selection described above and forms the e-mail. The control unit 231 sends information indicating the selected licensed content and information indicating the selected example of sentence to the e-mail forming unit 233. The e-mail forming unit 233 loads the corresponding licensed content and the sentence from the licensed contents storing unit 236 and the mail template storing unit 237 based on these information and inserts them to the predetermined position of the mail format of the selected mail template. Moreover, the e-mail forming unit 233 loads information on present time and date from the system information recording unit 235 and inserts this information to the predetermined position of the mail format. The e-mail is formed in this manner.

The mail template defines the procedure of forming e-mail and control procedure of displaying screen as described above. For this reason, the mail template is prepared for each content.

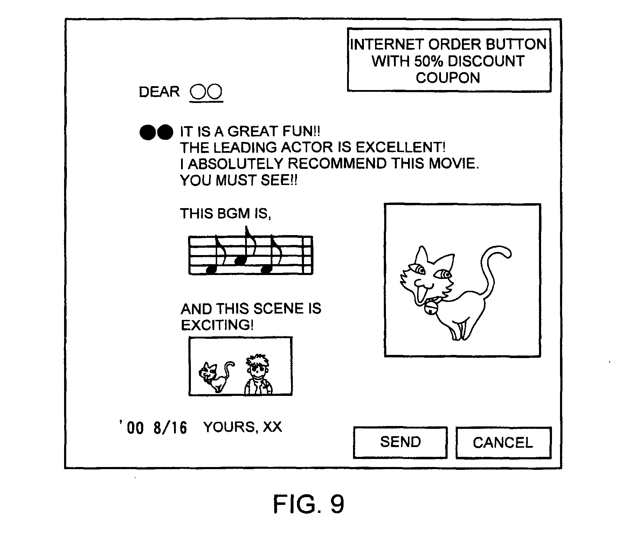

The finished e-mail is sent from the e-mail forming unit 233 to the control unit 231 and the displaying unit 232 displays the finished e-mail on a screen of the display of the terminal device 20. The finished e-mail is, for example, as shown in Fig. 9. The user checks the finished e-mail, and if the user decides to send this e-mail, he or she selects "send" button on the screen as shown in Fig. 9. When the "send" button is selected, in other words, the determination of step S109 is affirmed, the e-mail forming unit 233 sends this e-mail via the network interface unit 234 in step S110.

It is preferred that the terminal device 20 may send the answer data for the questionnaire inputted by the user during the forming process of e-mail to the contents distribution server 10 or another server (the server of the movie distributor). In this way, the movie distributor can collect the user's impression of the movie etc. automatically.

On the other hand, if the user decides not to send the e-mail, he or she selects "cancel" button on the screen as shown in Fig. 9. When the "cancel" button is selected, in other words, the determination of step S109 is negated, the e-mail forming program ceases the procedure without sending the e-mail in step 111.

The instruction of sending e-mail or canceling sending e-mail described above may be given by the user's operation of button prepared in the terminal device 20 or the operation unit 220 for instructing to send e-mail or to cancel sending e-mail.

Meanwhile, the button displayed on the upper right of the screen as shown in Fig. 9 is a order button with a discount credit. A user receiving the e-mail is capable of buying the movie content discounted by 50%. More particularly, an order processing program invoked in response to selection of this button is embedded in the e-mail. When the user selects the button after receiving the e-mail, the above-mentioned order processing program runs on the terminal device 20 and accesses to a contents selling server on the network, thus order of movie contents etc. and settlement can be achieved. Alternatively, the order button with the discount credit links to the URL of the above-mentioned contents selling server, and the terminal device 20 may accesses to this URL in response to the selection of the button by the user.

As described above, according to the preferred embodiment, the user can form e-mail comprising text, images and sound by the user's selection operation by means of the operation unit 220 while restraining the user's complicated input operation as much as possible. The user can easily form the e-mail attached with multimedia information without special knowledge or experience about multimedia technology. Furthermore, the user can share the impression of the movie (information on the situation of the user at the time) with another people by the e-mail utilizing the picture or BGM of the movie.

### - Second Application -

The present invention may be applied to a case in which a video game is utilized as content.

In the video game, especially in the RPG (Role Playing Game), a variety of events are carried out in accordance with a start of the game. The events are, for example, an input of a character at the start of the game, a shopping in a town in the game space, or an exploration etc. In this case, a mail template that forms e-mail corresponding to the progress of the game is preferable.

In progress of the video game, information about the game (situation information) such as a history of the game varying in association with the progress of the game or a score of the game at the time is recorded in the system information storing unit 235. In response to an instruction of forming e-mail from the user, the control unit 231 loads the mail template available at the moment from the mail template storing unit 237 with reference to the situation information in the system information storing unit 235, and controls the display unit 232 to show an e-mail forming screen on a display of the terminal device 20 based on the situation information at the moment. As in the first embodiment, the user selects his or her favorite licensed content or example of sentence from the licensed contents or examples of sentences defined in the mail template. The e-mail is formed using these selected licensed contents and examples of sentence. For example, the licensed contents and the examples of sentences are provided which are suitable for a situation or stage in accordance with the progress of the game. The stage is, for example, described below:

### (1) Start of the game

A background of purchase, an opening cut, the name of selected character, the image of the character, configuration information about organized team, and the licensed contents such as pictures are provided in the mail template for notifying the user's friend of purchasing the game.

### (2) During the progress of the game (Part 1)

A history of the game, a situation of the game (a situation of the team etc.), information about a checkpoint character, the licensed content such as a cut of a checkpoint event, a picture (pictorial postcard) of an unexplored territory event, or a hint of the game are provided in the mail template for notifying the situation of progress.

### (3) During the progress of the game (Part 2)

The score of the game, the licensed contents such as tool data for the game, or item data are provided in the mail template for exchanging game information or giving a present of values in the game to the user's friend playing the same game.

### (4) During the progress of the game (Part 3)

An order list of real products, an order confirmation, an acknowledgment, an address of delivering product, the licensed content such as a mail attached with the product to be delivered are provided in the mail template for the game distributor or the affiliate company in order to deal with the order of the related products of the game.

### (5) After the finish of the game

The history of the game, the licensed contents such as a memory event, the hint of the game, or the impression of the game are provided in the mail template for sharing the user's friend with the impression of the game.

As described above, the user can share another people with the user's experienced situation like a pictorial postcard by the e-mail at every stage. Furthermore, this e-mail can be an advertisement of the game.

Moreover, as described above, the user can send the e-mail to the distributor of the game or another player attached with the real-time experienced situation of the user.

For example, the user who asks for the hint information of the game in order to proceed to next stage can send an inquiry e-mail to the distributor of the game as he or she plays the game. The distributor of the game who receives the inquiry e-mail can refer the real-time experienced situation of the user attached with the e-mail, so that the distributor of the game can give the user an appropriate hint (a hint which does not disturb the progress and direction of the game while meeting the user's request) as well as preventing careless exposure of information (spoiler).

Furthermore, the user can make a successful communication with another player about the game via the e-mail. In the second embodiment described above, an example applied to RPG is explained concretely. However, the second embodiment can be applied not only to RPG, but also to a variety of game such as an action game or simulation game. Preferably, the second embodiment may be applied to a game in which the history of the game formed in accordance with the progress of the game has some kind of meaning or value for the user.

### - Third Application -

The present invention may be applied to a case in which a map or sightseeing database is used as content.

Recently, in a car navigation system or in a configuration where a mobile information terminal such as a mobile phone is equipped with a small peripheral memory unit, location information acquired by the car navigation system or the mobile information terminal can be stored or recorded in a memory unit in the car navigation system or the peripheral memory unit. Such location information acquired by the mobile information terminal etc. is important data indicating a situation of movement of the user. Consequently, it is preferable that the terminal device 20 controls the peripheral memory unit, the car navigation system or the mobile information terminal to transfer such location information as described above to the terminal device 20, and identifies the path of the user's movement on a map or sightseeing database. Thus, it is possible to form the e-mail in which plenty of data of visited places are incorporated by searching sightseeing data in the map or sightseeing database based on the path of the user's movement. The map or sightseeing database means a database that provides a map image to be displayed indicating the area including the corresponding location in response to the destination of location name, station name, landmark name, or longitude or latitude information, and that provides information in relationship with the sightseeing spot located in the area.

For example, in the case that the user visits Kamakura (location name), the mail template is provided that searches or selects the map content in which the travel route of the user is displayed, and the photo content and the caption content of the famous place or historical spot which the user stopped by on the way using the map or sightseeing database based on the location information, and that forms e-mail attached with the selected map content etc. Therefore, the user can easily form the e-mail notifying the user's travel, with which the route map and the photo in various place are attached.

While the present invention has been described in terms of the preferred embodiments and the modifications thereof, the invention is not to be limited thereto, but can be embodied in various ways without departing from the principle of the invention as defined in the appended claims. For example, it is not necessary that each server in the preferred embodiment described above is comprised of a single data processing unit; each server may be comprised of a plurality of data processing units each of which cooperates with each other and executes a predetermined data processing.

As described above, according to the present invention, the user can form e-mail which is comprised of the text selected from the examples of sentences and the picture or the sound of the licensed content using the e-mail program corresponding to the content as multimedia information, as well as playing this content, and can send this e-mail to another user. Consequently, the user can form an e-mail with high quality data attached, which reflects a real-time situation at the time of utilizing content, by a simple selecting operation without a high-grade authoring system. Therefore, it is easy to transmit the user's intention or situation data.

Moreover, the distributor of contents can expect a so-called mouth-to-mouth advertisement and can control the detail and the format of the contents to be distributed at the distributor's side. Therefore, the present invention has a merit to add incentive of providing high-quality contents data to the distributor of contents and to license the contents for the distributor of contents easily.

## Claims

1. An electronic mail system comprising:
first storing means for storing a plurality of contents data,
second storing means for storing a mail template which contains a screen for forming an electronic mail and a layout of said plurality of contents data in said screen, and
control means for forming an electronic mail for displaying the screen on display means with the contents data being arranged according to the mail template, for selecting said contents data in response to a user's selection via input means, and for forming an electronic mail file with said selected contents data being added thereto.

2. An electronic mail system according to claim 1, wherein
the mail template further includes a dialog screen relating to the contents data and answer options in the dialog screen, and
said control means displays said inquiry screen on the display means with the answer options being arranged, forms answer data in response to the user's selection via the input means, and forms the electronic mail file with the answer data being added thereto.

3. A method for forming an electronic mail with contents data being added thereto, comprising the steps of:
loading a mail template which contains a screen for forming an electronic mail and a layout information on the content data in the screen, the contents data being a target to be added thereto,
displaying said contents data according to said information on the screen and the layout information,
allowing a user to select any of said content data, and
forming an electronic mail file with the selected contents data being added thereto.

4. A method for forming an electronic mail according to claim 3 wherein the mail template further includes a dialog screen relating to the contents data and answer options in the dialog screen, and
the method for forming electronic mail further comprises the steps of:
displaying the dialog screen with the answer options being arranged thereon,
allowing the user to select any of the answer options, and
forming the electronic mail file with said selected answer options being added thereto.

5. A computer program for forming an electronic mail with contents data being added thereto, the computer program controlling a data processing unit to perform the steps of:
loading a mail template which contains a screen for forming an electronic mail and a layout information on the content data in the screen, the contents data being a target to be added thereto,
displaying the contents data on the screen and according to the layout information,
allowing a user to select any of the content data, and
forming an electronic mail file with said selected contents data being added into.

6. A computer program according to claim 5, wherein the mail template further includes a dialog screen relating to the contents data and answer options in the dialog screen, and
the computer program further controls the data processing unit to perform the steps of:
displaying the dialog screen with the answer options being arranged thereon,
allowing the user to select any of the answer options, and
forming an electronic mail file with the selected answer options being added thereto.

7. An electronic mail system according to claim 1, wherein said contents data is at least one of text data, still picture data, motion picture data, and sound data.

8. A method for forming electronic mail according to claim 3, wherein said contents data is at least one of text data, still picture data, motion picture data, and sound data.

9. A computer program according to claim 5, wherein said contents data is at least one of text data, still picture data, motion picture data, and sound data.

10. A computer-readable recording medium in which a computer program according to claim 5, 6 or 9 is recorded.

11. An electronic mail system comprising:
first storing means for storing second contents data relating to first contents data,
second storing means for storing a mail template which contains a screen for forming an electronic mail and a layout of said second contents data in the screen, and
control means for forming an electronic mail with the second contents data being added thereto, in accordance with the mail template based on viewing the first contents data by a user.

12. A method for forming electronic mail into which second contents data relating to first contents data is added, comprising the steps of:
loading a mail template which contains a screen for forming an electronic mail and a layout information on the second contents data in the screen, the second contents data being a target to be added thereto, based on viewing the first contents data by a user, and
forming an electronic mail file with the second contents data being added thereto in accordance with the mail template.

13. A computer program for forming an electronic mail into which second contents data relating to first contents data is added, the computer program controlling a data processing unit to perform the steps of:
loading a mail template which contains a screen for forming an electronic mail and a layout information on the second contents data in the screen, the second contents data being a target to be added thereto, based on viewing the first contents data by a user, and
forming an electronic mail file with the second contents data being added thereto in accordance with the mail template.

14. An electronic mail system according to claim 11, wherein said second contents data is at least one of text data, still picture data, motion picture data, and sound data.

15. A method for forming electronic mail according to claim 12, wherein said second contents data is at least one of text data, still picture data, motion picture data, and sound data.

16. A computer program according to claim 13, wherein said second contents data is at least one of text data, still picture data, motion picture data, and sound data.

17. A computer-readable recording medium in which a computer program according to claim 13 or 16 is recorded.
